# EUROPEAN PATENT SPECIFICATION

(11) **EP 0 659 377 B1**
(45) Date of publication and mention of the grant of the patent: **12.03.1997**
(21) Application number: 94203543.7
(22) Date of filing: 06.12.1994
(51) Int. Cl.: A47J 31/40

(54) **Automatic machine for making espresso coffee or similar drinks**
Automatische Maschine zum Bereiten von Espressokaffee oder dergleichen
Machine automatique pour préparer du café expresso ou des boissons similaires

(30) Priority: 20.12.1993 IT RE930087
(43) Date of publication of application: 28.06.1995
(73) Proprietor: G3 FERRARI S.R.L. DI FERRARI GIUSEPPE & C., I-41030 Bastiglia (Modena) (IT)
(72) Inventor: Lenzi, Marco, I-40046 Porretta Terme (Bologna) (IT)
(74) Representative: Corradini, Corrado

(56) References cited:
- EP-A- 0 202 517
- EP-A- 0 299 399
- EP-A- 0 309 780
- EP-A- 0 484 277
- EP-A- 0 528 758
- BE-A- 745 939

## Description

This invention relates to an automatic machine for making espresso coffee or similar drinks, in which the drink is obtained by introducing the ground coffee or other ground product into a decoction chamber, compressing this ground product and then passing pressurized steam/hot water through it.

Typically the machine of the invention is intended as an automatic distributor for such drinks, in particular coffee.

The EP-A-299399 discloses an automatic machine for making espresso coffee according to the preamble of claim 1, having a body with a cylindrical decoction chamber in its interior and able to move in the direction of the axis of this chamber. With the chamber there are associated two plungers, the first of which is constrained to the chamber such that its plug cannot leave the chamber but remains resting against a stop wall at a first end of the chamber; the second plunger is fixed to a fixed structure and enters and leaves the chamber via its second end. The body is moved with outward and return travel alternately.

The steam/hot water is fed in the decoction chamber through an axial channel in the first plunger rod, and to the latter through a flexible tube connecting the said rod to a fixed steam/hot water source.

During its outward travel, the movable body drags the first plunger towards the second plunger, both within said chamber, so as to compact the product in the chamber to the required extent and hence effect decoction of the product to obtain the drink, by means of steam/hot water passing through said compacted product. During the return travel the second plunger withdraws from the chamber until it lies at a distance from the movable body. Simultaneously the first plunger is moved until it abuts against a suitable stop element so that it stops and, by sliding within the chamber, expels the spent product.

The connection between the said rod and said source presents some drawbacks which limit the machine efficiency and reliability, due to the flexible tube being repeatedly subject to deformation under high temperature conditions, that shorten hardly its life.

The scope of the present invention is to improve the means for feeding the steam/hot water to the decoction chamber and for compressing the ground product in the decoction chamber, by providing constructionally simple means of reliable and fast operation.

The scope is achieved by a machine for making espresso having the characteristics recited in the claims.

The invention is described in detail hereinafter with the aid of the accompanying figures, which illustrate a preferred but not exclusive embodiment thereof.

Figure 1 is a section through the machine on an axial vertical plane, showing it in the configuration for loading the ground product.

Figure 2 is a section through the machine on an axial horizontal plane, showing it in the configuration in which the ground product is under maximum compaction.

Figure 3 is a section on the plane III-III of Figure 1.

Figure 4 is an axial section through the actuator of both the plungers 3 and 4.

The figures show substantially only those machine members provided for decoction, compression of the ground product and expulsion of this product when spent, the other means, such as those for supplying the ground product and for supplying pressurized steam/water, being any means of known type.

The invention comprises a movable body 10 having in its interior a cylindrical decoction chamber 11 with two ends (or mouths), namely a first end 11' and an open second end 11''.

The body 10 is constrained to a fixed structure 20 such that it can move in the direction of the axis of the chamber 11. Specifically, the body 10 has the overall outer shape of a right circular cylinder comprising two opposing prismatic projections 12 on two lateral sides and a substantially cylindrical upper projection 13. The structure 20 is roughly of parallelepiped outer shape and in its interior possesses axial cavities of constant cross-section within which the body 10 slides as an exact fit. Specifically, it possesses a central cavity 21 within which the cylindrical part of the body 10 slides, and from which there extend an upper corridor 23 within which the upper projection 13 slides as an exact fit, and two lateral grooves 22 within which the prismatic projections 12 slide as an exact fit.

Said corridors 21 and 23 and grooves 22 have a length much greater (for example 2-4 times) than the length of the body 10, the body 10 being able only to translate along them.

With the body 10 there are associated means for moving it in an axial direction within the structure 20 with alternately outward and return travel. Specifically, a worm 24 is provided extending along the entire length of the structure 20, idly pivoted on the two end vertical walls 25' and 25'' of the structure 20. A nut screw 26 fixed within the upper projection 13 engages the worm 24. The worm is driven by motor means (not shown) in one direction and the other alternately.

A first plunger 3 is provided, the plug 31 of which is axially slidable under sealed conditions within the chamber 11. The rod of the plunger 3 emerges from the chamber 11 through the first end 11'. The plug 31 is axially free relative to the body 10, however is constrained to remain within the chamber 11 in proximity to the first end 11' by virtue of a stop wall 14 located close to the end 11'.

The rod of the plunger 3 is telescopic and is formed from a portion 33 fixed to the wall 25', and a portion 34 rigid with the plug 31. The plug 31 and the relative rod portion 34 are axially free relative to the structure 20. A cylindrical spring 35 precompressed between the wall 14 and the end of the portion 34 rearwardly urges the portion 34 so that the plug 31 is normally maintained against the wall 14 in proximity to the end 11'.

With the plunger 3 there is associated an abutment element arranged to halt the rearward travel of the plunger during its return travel. Said abutment element is defined by the wall 25' against which the free end of the rod portion 34 abuts.

There is also provided a second plunger 4 opposing and located symmetrical to the plunger 3 with its plug 41 slidable under sealed conditions within the chamber 11, it being substantially fixed axially relative to the structure 20 and passing through the second end 11'' of the chamber 11.

The rod 42 of the plunger 4 is axially constrained to the vertical wall 25''.

The plungers 3 and 4 comprise internal ducts which connect the active faces of the respective plugs to the steam/hot water source and to the drink delivery outlet respectively.

Specifically, each plunger 3 and 4 possesses a thin circular plate 39, 49, which is provided with numerous minuscule holes preventing passage of ground product granules and defines the active face of the respective plug.

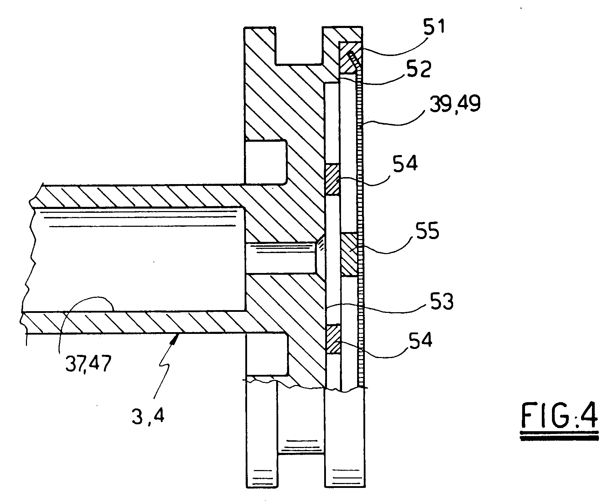

Within the plug 31, 41 there is formed behind each plate 39, 49 a narrow circular chamber 53 closed on one side by the respective perforated plate 39, 49 (Figure 4).

The chamber 53 of the plug 31 communicates with an axial channel internal to the rod portion 34, within which the other rod portion 33 slides under sealed conditions. The channel 37 communicates with a further thinner axial channel 36 within the portion 33. The channel 36 terminates at the rear end of the portion 33 to which there is connected a conduit 9 connected to a pressurized steam/hot water source (not shown).

The chamber 53 of the plug 41 communicates with an axial channel 47 within the rod 42 which opens at the free end of this latter.

This end is connected to a drink outlet conduit 7 conveying the drink produced in the decoction chamber 11 to the user.

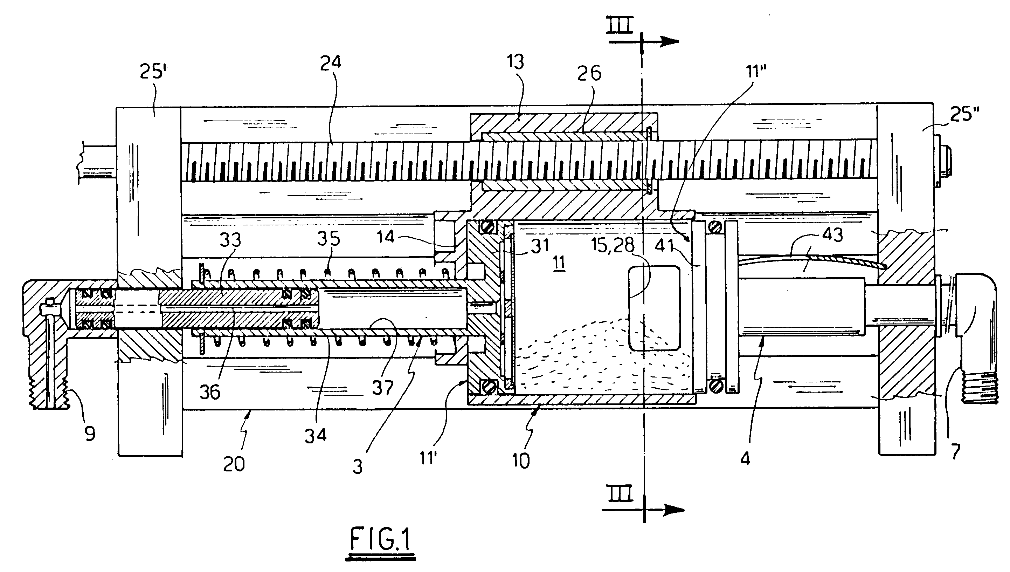

In the lateral wall of the body 10 in correspondence with a prismatic projection 12 there is provided an aperture 15 through which the ground product passes into the chamber 11. The aperture 15 is in a position axial to the chamber 11 so as to communicate with that chamber portion lying between the two plugs 31 and 41 when the plug 41 is positioned at the second end 11'' (Figure 1).

When the body 10 reaches its outward end-of-travel position, the plug 41 passes beyond said aperture 15 and hence that chamber portion lying between the two plugs 31 and 41 does not communicate with said aperture 15. The aperture 15 is positioned a short distance from the end 11''.

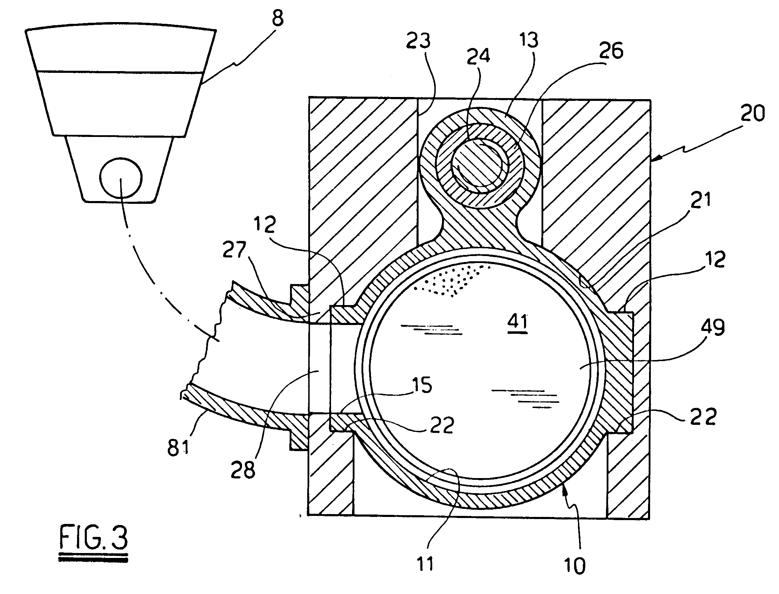

In a lateral wall of the structure 20 against which the outer lateral surface of the body 10 adheringly slides, namely in that wall 27 opposite the prismatic projection 12, there is provided an aperture 28 for passage of the ground product, its passage size being equal to that of the aperture 15. Into the aperture 28 there opens a ground product delivery conduit 81 originating from a suitable ground product delivery machine (this machine is of known type and is shown only schematically in Figure 3). The aperture 28 is in an axial position so as to mate with the aperture 15 when the body 10 is in an axial position such that the aperture 15 communicates with that chamber portion lying between the two plugs 31 and 41. The aperture 28 is positioned towards the centre with respect to the plug 41, either in line with it or at a short distance from it. The aperture 28 is closed by the outer lateral surface of the body 10, specifically by the outer face of the projection 12, when the body 10 continues its travel and is close to its outward end-of-travel position.

The operation of the illustrated means takes place cyclically as follows.

It will be assumed that initially the body 10 is at rest in the position for loading the ground product (Figure 1). In this position, both the plugs 31 and 41 lie within the chamber 11 at its respective ends 11' and 11'', that chamber portion between them then having substantially its maximum length. In addition the two apertures 15 and 28 are substantially mating and communicate with said chamber portion. The body 10 remains at rest in this position while the machine 8 dispenses ground product, which by gravity fall or by mechanical thrust enters the chamber 11 through the apertures 15 and 28.

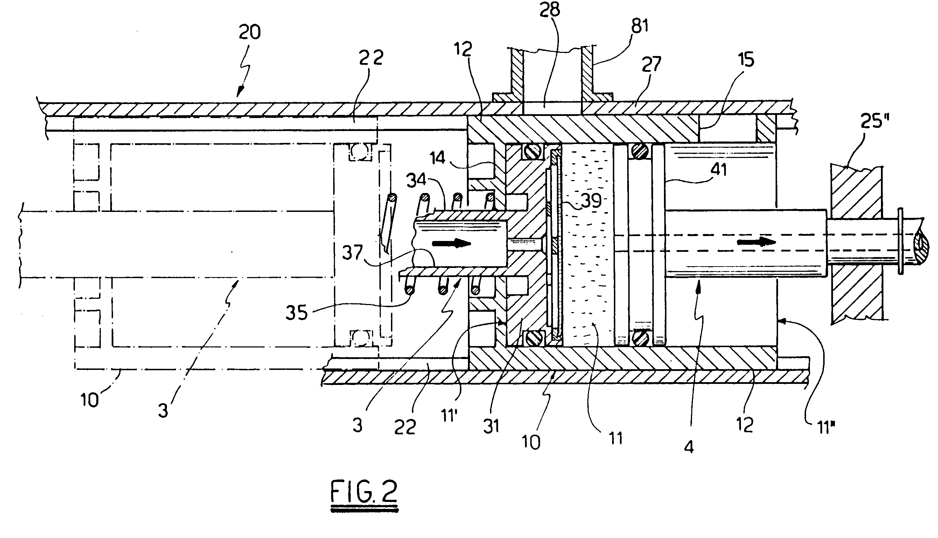

When the predetermined quantity of ground product has been loaded, the worm 24 is rotated so that the body 10 is made to advance along its outward travel, ie towards the plunger 4. During this travel the body 10 drags with it the plug 31, which approaches the plug 41 to compact the ground product within the chamber 11. When this attains the desired maximum degree of compaction (minimum distance between the two plugs) the body 10 is halted (position shown by full lines in Figure 2) and the product undergoes decoction by feeding a predetermined quantity of pressurized steam/hot water through the channel 36, 37. This steam/hot water emerges from the plug 31 through the respective plate 39, and passes through the compressed ground product between the two plugs where it decocts the product to form a liquid drink which enters the plug 41 via the plate 49. From here it passes through the channel 47 to the conduit 7 which delivers it to the user. During this stage that chamber portion between the two plugs has moved to the side of the aperture 15, the aperture 28 being closed by the wall 27.

When decoction (and hence delivery of the drink to the user) is complete, the body 10 is made to undergo its return travel by rotating the worm 24 in the reverse direction.

Initially the body 10 and the plug 31 withdraw from the plunger 4 while the rod portion 33 enters the portion 34. The rod portion 34 then halts against the wall 25' while the body 10 continues its return travel. Hence the plug 31, overcoming the thrust of the spring 35, slides along the whole length of the chamber 11 to hence expel the spent ground product from the chamber (position shown by dashed lines in Figure 2). After this the outward travel begins, the plug 31 urged by the spring 35 returning towards the end end 11' and against the wall 14. When the body 10 reaches said ground product loading position, it stops and the aforedescribed cycle is repeated in the same manner. All the described operations are controlled automatically in sequence by a control system using normal means and methods.

Advantageously the plunger 4 can be able to undergo short axial travel and be normally urged against the plunger 3 by a precompressed spring 43. The compaction stage then takes place against the opposition provided by this spring, which determines the end of outward travel when a certain compression has been attained. In this manner compaction can be obtained having a constant predetermined value even as the quantity of ground product present in the chamber varies.

In addition, according to the present invention the bodies of the plungers 3 and 4 are constructed of synthetic resin. The circular plates 39 and 49 are of metal and have their edge embedded in a peripheral ring 51 comprising radial reinforcement elements 55 for opposing flexure of the plates 39, 49.

Ribs 54 against which the radial elements 55 rest are provided in the chamber 53.

The ring 51 is fixed by thermowelding to the front face of the plunger, and more precisely onto an annular rim 52 positioned about the chamber 53. Because of these characteristics the plunger is particularly simple and economical to construct, to the extent that when the filtering plates 36, 49 or the channels 37, 47 become blocked it is more convenient and simple to change the entire plunger by replacing it with a new one.

## Claims

1. Automatic machine for making espresso coffee or similar drinks, in which the drink is obtained by introducing the ground coffee or other product into a decoction chamber (11), then compacting this ground product and passing pressurized steam/hot water through it, comprising:
a movable body (10) having a cylindrical decoction chamber (11) with a first end (11') and a second open end (11''), said chamber being in communication with means (8) for supplying the ground product, and said movable body (10) being constrained to a fixed structure (20) in a manner able to move in the direction of the axis of the chamber (11);
a first plunger (3) axially slidable under sealed conditions within the chamber (11) and having its plug (31) retained by stop means (14) positioned at said first end (11') so that it cannot leave through said first end (11'), said plug (31) being axially movable relative to the fixed structure (20);
a second plunger (4) axially slidable under sealed conditions within the chamber (11) and opposing the first plunger (3), its plug (41) being able to pass through the second end (11'') of the chamber (11); said second plunger being substantially constrained axially
said plungers (3) and (4) having internal ducts for communication between the active faces of the respective plugs (31,41) and, respectively, the steam/hot water source and the drink delivery outlet;
and means (24,26) for moving the movable body (10) in said axial direction with outward and return travel alternately, the return travel of the movable body (10) causing the second plunger (4) to withdraw from the decoction chamber (11) and the first plunger (3) to halt against an abutment element (25') and then slide within the chamber (11) along its entire length, the outward travel of the movable body (10) causing the first plunger (3) to be dragged and the second plunger (4) to penetrate into the chamber (11) with mutual approach of the two plugs (31,41),
characterised in that the first plunger (3) has a telescopic rod consisting of a first rod portion (34), rigid with the plug (31), and a second rod portion (33) fixed to the structure (20), an axial channel (37) of the first rod portion communicating with the active face of the plug (31), the second rod portion (33) which slides under sealed conditions in said axial channel (37) having a thinner axial channel (36) terminating at its rear end in communication with the steam/hot water source.

2. A machine as claimed in claim 1 characterised in that the first rod portion (34) is urged by spring means (35) rearwards relative to the movable body (10) in such a manner as to maintain the plug (31) normally at the first end (11'') of the chamber (11), the free end of said portion (34) abutting against a part of the fixed structure (20) to halt the first plunger (3) during its return travel.

3. A machine as claimed in claim 1, characterised in that the plugs (31,41) comprise circular filtering plates (39,49) retained by respective peripheral rings (51) welded to the respective plug.

## Patentansprüche

1. Automatische Maschine zum Bereiten von Espressokaffee oder ähnlichen Getränken, wobei das Getränk dadurch erreicht wird, daß gemahlener Kaffee oder ein anderes Produkt in eine Brühkammer (11) eingegeben wird, dann das gemahlene Produkt zusammengepreßt und unter Druck stehenden Dampf bzw. heißes Wasser durch dasselbe durchgeleitet wird, die folgendes aufweist:
einen beweglichen Körper (10), der eine zylindrische Brühkammer (11) mit einem ersten Ende (11') und einem zweiten, offenen Ende (11'') aufweist, wobei die Kammer in Verbindung mit Einrichtungen (8) zur Zufuhr des gemahlenen Produkts steht, und der bewegliche Körper (10) an eine feste Struktur (20) derart gebunden ist, daß er in der Richtung der Achse der Kammer (11) beweglich ist;
einen ersten Kolben (3), welcher unter abgedichteten Bedingungen innerhalb der Kammer axial verschiebbar ist und dessen Stöpsel (31) durch Stoppeinrichtungen (14), welche am ersten Ende (11') angeordnet sind, zurückgehalten wird, so daß er nicht durch das ersten Ende (11') austreten kann, wobei der Stöpsel (31) relativ zu der festen Struktur (20) axial beweglich ist;
ein zweiter Kolben (4), welcher unter abgedichteten Bedingungen innerhalb der Kammer (11) axial verschiebbar ist und dem ersten Kolben (3) gegenüberliegt, wobei dessen Stöpsel (41) durch das zweite Ende (11'') der Kammer (11) führbar ist, wobei der zweite Kolben (4) im wesentlichen axial geführt ist;
die Kolben (3) und (4) weisen innere Leitungen auf zur Verbindung zwischen den aktiven Seiten der jeweiligen Stöpsel (31,41) und, entsprechend, zwischen der Dampf-/Heißwasser-Quelle und der Getränkeausgabe;
und Einrichtungen (24,26) zum Bewegen des beweglichen Körpers (10) in der axialen Richtung mit abwechselnder Bewegung nach außen und zurück, wobei die Rückbewegung des beweglichen Körpers (10) den zweiten Kolben (4) veranlaßt, sich von der Brühkammer (11) zu entfernen, und den ersten Kolben (3) an einem Anschlagelement (25') zum Stillstand zu kommen und dann innerhalb der Kammer (11) über ihre ganze Länge zu gleiten, und wobei die Bewegung des beweglichen Körpers (10) nach außen den ersten Kolben (3) mitnimmt und den zweiten Kolben (4) veranlaßt, in die Kammer (11) einzudringen, unter gegenseitiger Annäherung der beiden Stöpsel (31,41),
**dadurch gekennzeichnet,** daß der erste Kolben (3) eine teleskopartige Stange aufweist, welche aus einem ersten, fest mit dem Stöpsel (31) verbundenen Stangenabschnitt (34) und aus einem zweiten Stangenabschnitt (33), welcher an der Struktur (20) befestigt ist, besteht, wobei ein axialer Kanal (37) des ersten Stangenabschnittes mit der aktiven Seite des Stöpsels (31) in Verbindung steht, und wobei der zweite Stangenabschnitt (33), welcher unter abgedichteten Bedingungen in dem axialen Kanal (37) gleitet, einen dünneren axialen Kanal (36) aufweist, welcher an seinem hinteren Ende in Verbindung mit der Dampf/Heißwasser-Quelle endet.

2. Maschine nach Anspruch 1,
**dadurch gekennzeichnet,** daß der erste Stangenabschnitt (34) durch eine Federeinrichtung (35) rückwärts relativ zu dem beweglichen Körper (10) derart gedrückt wird, daß der Stöpsel (31) im Normalfall am ersten Ende (11') der Kammer (11) verbleibt, wobei das freie Ende des Abschnitts (34) an einem Teil der festen Struktur (20) anstößt, um den ersten Kolben (3) während seiner Rückbewegung anzuhalten.

3. Maschine nach Anspruch 1,
**dadurch gekennzeichnet,** daß die Stöpsel (31,41) runde Filterplatten (39,49) aufweisen, welche durch entsprechende peripherische Ringe (51) gehalten werden, welche an dem entsprechenden Stöpsel angeschweißt sind.

## Revendications

1. Machine automatique pour préparer un café express ou des boissons similaires, dans laquelle la boisson est obtenue par introduction du café moulu ou d'un autre produit dans une chambre de décoction (11), après quoi on compacte ce produit moulu et l'on fait passer de la vapeur/eau chaude sous pression à travers lui, la machine comprenant :
un corps mobile (10) comprenant une chambre cylindrique de décoction (11) avec une première extrémité (11') et une seconde extrémité ouverte (11''), ladite chambre étant en communication avec des moyens (8) pour fournir le produit moulu, et ledit corps mobile (10) étant assujeti à une structure fixe (20) de manière à pouvoir se déplacer dans la direction de l'axe de la chambre (11);
un premier piston (3) coulissant axialement dans des conditions d'étanchéité à l'intérieur de la chambre (11) et comportant son corps obturateur (31) retenu par des moyens d'arrêt (14) positionnés au niveau de ladite première extrémité (11') de sorte qu'il ne peut pas s'échapper au travers de ladite première extrémité (11'), ledit corps obturateur (31) étant mobile axialement par rapport à la structure fixe (20);
un second piston (4) coulissant axialement dans des conditions d'étanchéité à l'intérieur de la chambre (11) et faisant face au premier piston (3), son corps obturateur (41) étant susceptible de passer à travers la seconde extrémité (11'') de la chambre (11); ledit second piston étant sensiblement assujetti axialement;
lesdits pistons (3) et (4) comportant des canalisations internes assurant la communication entre les faces actives des corps obturateurs respectifs (31, 41) et, respectivement, la source de vapeur/eau chaude et l'orifice de sortie délivrant la boisson;
et des moyens (24, 26) pour déplacer le corps mobile (10) dans ladite direction axiale avec un déplacement alternatif de sortie et de retour, le déplacement de retour du corps mobile (10) provoquant le retrait du second piston (4) hors de la chambre de décoction (11) et l'arrêt du premier piston (3) contre un élément de butée (25') et alors le coulissement à l'intérieur de la chambre (11) sur toute sa longueur, le trajet de sortie du corps mobile (10) provoquant la traction du premier piston (3) et la pénétration du second piston (4) dans la chambre (11) avec une approche mutuelle des deux corps obturateurs (31, 41),
ladite machine étant caractérisée en ce que le premier piston (3) comporte une tige télescopique constituant une première partie de tige (34), solidaire de l'obturateur (31), et une seconde parite de tige (33) fixée à la structure (20), un canal axial (37) de la première partie de tige communiquant avec la face active de l'obturateur (31), la seconde partie de tige (33) qui coulisse dans des conditions d'étanchéité dans ledit canal axial (37) comportant un canal axial plus fin (36) qui se termine à son extrémité arrière en communication avec la source de vapeur/eau chaude.

2. Machine selon la revendication 1, caractérisée en ce que la première partie de tige (34) est pressée par des moyens ressorts (35) en arrière relativement au corps mobile (10) de façon à maintenir l'obturateur (31) normalement au niveau de la première extrémité (11') de la chambre (11), l'extrémité libre de ladite partie (34) venant en butée contre une partie de la structure fixe (20) pour arrêter le premier piston (3) lors de son déplacement de retour.

3. Machine selon la revendication 1, caractérisée en ce que les obturateurs (31, 41) comprennent des plaques filtrantes circulaires (39, 49) retenues par des bagues périphériques respectives (51) soudées à leur obturateur respectif.
